# EUROPEAN PATENT APPLICATION

(11) **EP 0 862 185 A1**
(43) Date of publication of application: **02.09.1998**
(21) Application number: 98102911.9
(22) Date of filing: 19.02.1998
(51) Int. Cl.: G21C 3/322

(54) **Water channel flow control in a nuclear fuel assembly**

(30) Priority: 28.02.1997 US 808710
(71) Applicant: Siemens Power Corporation, Richland, WA 99352-0130 (US)
(72) Inventor: Adams, Daniel L., Richland, WA 99352 (US); Bishop, William D., West Richland, WA 99353 (US)
(74) Representative: Kahlhöfer, Hermann, Dipl.-Phys.

(57) **Abstract**

An apparatus for at least partially disabling the water moderating action of the central water channel of a BWR fuel assembly in the first one or two cycles of reactor operation when the moderation is not advantageous and for restoring the water channel moderating action in the remaining cycles of reactor operation when the water channel achieves the desired reactivity enhancement. In a BWR fuel assembly having an upper tie plate, a lower tie plate, a plurality of fuel rods extending from the lower tie plate to the upper tie plate, and a central moderator channel extending between the lower tie plate and the upper tie plate, where the central moderator channel has an end fitting provided with at least one flow hole, a flow restriction plate is disposed adjacent to the end fitting of the central moderator-flow channel. An actuator rod which traverses the upper tie plate is rigidly attached to the flow restriction plate for shifting the flow restriction plate from a first position in which flow through the flow hole is at least partially restricted to a second position in which flow through the flow hole is less restricted than at the first position of the flow restriction plate.

## Description

### Background of the Invention

This invention relates to a nuclear fuel rod assembly in a nuclear reactor. More particularly, this invention relates to apparatus in a boiling water reactor (BWR) fuel rod assembly and to an associated method for controlling the moderating action of the coolant moderator within in the fuel rod assembly.

In nuclear reactors intended for the generation of power, nuclear fuel assemblies are customarily of the rod type in which nuclear fuel rods are typically arranged in closely spaced arrays in generally square configurations. Each fuel rod assembly for a boiling water reactor (BWR) is typically enclosed by a generally square outer channel. Inside the outer channel, the elongate nuclear fuel rods extend parallel to each other between a lower tie plate and an upper tie plate. Typically, a central or inner water channel and/or water rods also extend parallel to the fuel rods between the lower tie plate and the upper tie plate. The central water channel and water rods have the intended function of moderating neutron energies by slowing down the neutrons so that a greater portion of the neutrons emitted in the fission process have an energy suitable for further fissioning of fuel.

At the bottom of the nuclear fuel rod assembly, where the coolant moderator, i.e., water, enters the outer channel, the coolant has a temperature at or slightly below its saturation temperature. As the coolant flows upward through the assembly, power is transferred from the fuel rods to the coolant. Steam is produced and the fraction of steam in the coolant is increased. At the top of the fuel assembly, the coolant is primarily steam and, as a result of the high volume fraction of steam in the upper region of the reactor core, the upper region of the core becomes undermoderated and overenriched owing to a sparsity of hydrogen atoms in comparison with the number of fissionable uranium or plutonium atoms. As a consequence, there is less than optimum uranium utilization.

The central or inner water channel for the guidance of coolant moderator along a vertical path through the nuclear fuel assembly is physically spaced from the fuel rods and can have virtually any cross-sectional area or geometry and typically has a square or cruciform cross-sectional area. Alternatively, it can take the form of one or an array of hollow circular tubes or rods extending along the length of the fuel assembly. These and other configurations for a central water channel are disclosed in U.S. Patents 5,247,552 and 4,913,876. Sufficient coolant is circulated through the central water channel, rods or tubes to keep the contained coolant largely or completely in the liquid phase, thus increasing the neutron moderation in the central and upper regions of the fuel rod assembly.

In the beginning of life of a fuel assembly, the U-235 fissile inventory is high and the reactivity is high (actually too high to be controlled by control rods alone). This high reactivity is compensated for by adding Gadolinium burnable absorber to the fuel at the time of manufacture. The added Gadolinium has the disadvantage of leaving a parasitic absorber residue which reduces the reactivity below the desired value at the fuel's end of life. The use of Gadolinium burnable absorber thus results in the loss of excess neutrons.

It is known to lower the core water flow in the first part of a fuel cycle and to increase it towards the end of the cycle. This "flow spectral shift effect" acts on the active flow used to cool the fuel rods and is limited to the applicable thermal margins for safe operation. Also, it acts similarly on all fuel assemblies in a core, regardless of the stage of their burn-up. The flow spectral shift causes significant skew in the power distribution which pushes the limits of the thermal margins and also results in increased neutron leakage or loss.

### Objects of the Invention

An object of the present invention is to provide an apparatus for controlling coolant moderator flow through the central or inner water channel of a BWR fuel rod assembly. The control is to be implemented so as to reduce the reactivity in a boiling water nuclear reactor at the beginning of the fuel's life. Such moderator flow control does not have the residue problem that adding Gadolinium to the fuel rods has in the later stages of reactor operation.

A more particular object of the present invention is to provide an apparatus for at least partially disabling the central or inner water channel in an initial phase of reactor operation when the moderation is not advantageous and for restoring the central or inner water channel in the remaining cycles of reactor operation when the water channel achieves the desired reactivity enhancement.

An even more particular object of the present invention is to provide such an apparatus wherein the state of closure of the apparatus is verifiable by monitoring the top of the fuel rod assembly.

These and other objects of the present invention will be apparent from the descriptions and illustrations herein.

### Brief Description

This invention relies on a concept of optimized moderation enhancement in a boiling water nuclear reactor (BWR) by effectively throttling the coolant moderator in the central or inner water channel or in one or more water rods, referred to herein as a moderator channel. More specifically, the invention provides an apparatus for at least partially disabling the moderator channel exemplarily in the first one or two cycles of reactor operation when the moderation is not advantageous and for restoring the moderator channel in the remaining cycles of reactor operation when the moderator channel achieves the desired reactivity enhancement.

The invention can be used to reduce the dependence on burnable absorber, maximize the advantages of spectral shift operation, and generally optimize fuel and reload designs to significantly improve fuel cycle economy.

A fuel assembly in a nuclear reactor comprises, in accordance with an embodiment of the invention, an upper tie plate, a lower tie plate, a plurality of fuel rods extending from the lower tie plate to the upper tie plate, and a moderator channel, e.g ., a central or inner water channel, extending between the lower tie plate and the upper tie plate, the moderator channel having an end fitting provided with at least one flow hole. A flow restriction plate is disposed adjacent to the end fitting of the moderator channel. An actuator rod which traverses the upper tie plate is attached to the flow restriction plate for shifting the flow restriction plate from a first position in which flow through the flow hole is partially restricted to a second position in which flow through the flow hole is less restricted than at the first position of the flow restriction plate.

Preferably, where the moderator channel has a vertical axis, the flow restriction plate and the actuator rod are rotatably mounted to the moderator channel, whereby the first position and the second position are angularly spaced relative to one another. The flow restriction plate has a shape for partially covering the flow hole to partially prevent water flow through the flow hole at the first position of the flow restriction plate and for opening the flow hole to permit greater water flow through the flow hole at the second position of the flow restriction plate.

Pursuant to a feature of the present invention, a holding mechanism is provided for maintaining the flow restriction plate in the flow-impeding angular position or the open angular position. The holding mechanism is preferably spring loaded. Where a tubular member is rigidly connected to the end fitting, the actuator rod extends through the tubular member and the end fitting, while the holding mechanism includes a pin rigid with the actuator rod and further includes a J-shaped slot in the tubular member which is traversed by the pin. The spring loading is effectuated by a helical spring radially located between the actuator rod and the tubular member and longitudinally located between a shoulder on the actuator rod and the end fitting of the moderator channel to bias the actuator rod in an upward direction.

Where the end fitting is provided with a plurality of flow holes angularly spaced about the axis of the moderator channel, the flow restriction plate is formed with a plurality of radially extending lobes angularly spaced about the axis of the moderator channel. Each of the lobes may be provided with a thickened portion extending into a respective one of the flow holes in the first, flow-impending position of the flow restriction plate.

A fuel assembly in a nuclear reactor comprises, in accordance with another embodiment of the present invention, an upper tie plate, a lower tie plate, a plurality of fuel rods extending from the lower tie plate to the upper tie plate, and at least one water channel or water rod extending between the lower tie plate and the upper tie plate, the water channel or water rod having an inlet opening at a lower end. A moderator-flow regulator rod extending substantially axially through the water channel or water rod, the regulator rod being provided at a lower end with a stop ball inserted into the inlet opening to block moderator flow through the water channel or water rod during a first phase of reactor operation. The regulator rod is shiftably mounted to the water channel or water rod so as to enable a removal of the stop ball from the inlet opening to permit a greater moderator flow through the water channel or water rod during a second phase of reactor operation.

Preferably, the regulator rod is spring loaded to bias the stop ball to a closure position relative to the inlet opening.

According to a feature of the invention, the regulator rod is hollow to accommodate a flow of moderator through the regulator rod upon a removal of the stop ball from the inlet opening.

The regulator rod is advantageously provided at an upper end with a pressure relief valve for allowing steam to escape from the water channel or water rod when the stop ball is seated in the inlet opening.

Unlike the burnable absorber method of controlling the initial reactivity, the moderator displacement method of the present invention does not result in the loss of the excess neutrons. Instead, the reduced moderation reduces the percentage of the more reactive thermal neutrons while increasing the percentage of fast neutrons. The increased fast neutron flux (hardened neutron spectrum) results in the increased percentage of fast neutron absorption in U-238 inducing its transmutation into Pu-239. The increased production of the fissile plutonium isotopes is effective in increasing the energy content of the fuel assembly for the same initial enrichment, or equivalently allows the savings of using lower initial enrichment to generate the same quantity of energy from the fuel.

In contrast to the conventional flow spectral shift wherein the core water flow is lowered in the first part of a cycle and increased towards the end of the cycle, the "mechanical spectral shift" effect introduced by the present invention acts on the bypass flow and is not limited by the thermal safety margins. Also, the new spectral shift acts on each bundle in its own optimum way not as core-average manner. The flux and power skew problem will be mitigated as different neighbouring bundles are in different plug-states.

The present invention allows a reduction of the Gadolinium quantities used as a burnable absorber and concomitantly of the negative reactivity effect of its residue. The invention could also allow the reduction of the uranium enrichment and maximize plutonium conversion and utilization.

### Brief Description of the Drawing

Fig. 1 is a schematic partial side elevational view of a central water channel of a nuclear fuel rod assembly, showing an upper tie plate, a lower tie plate and a plurality of fuel rods, as well as a gating or stop element in the central water channel.

Fig. 2A is a schematic partial longitudinal cross-sectional view of the central water channel of Fig. 1, showing a particular embodiment of the gating or stop element in a position for blocking water flow through the central water channel during a first phase of reactor operation.

Fig. 2B is a view similar to Fig. 2A, showing the gating or stop element in another position which permits water flow through the central water channel during a subsequent phase of reactor operation.

Fig. 3A is a schematic partial longitudinal cross-sectional view of the central water channel of Fig. 1, depicting a modification of the central water channel and an embodiment of the gating or stop element in a position for completely blocking water flow through the central water channel.

Fig. 3B is a view similar to Fig. 3A, showing the gating or stop element in another position which permits partial water flow through the central water channel.

Fig. 3C is a view similar to Figs. 3A and 3B, showing the gating or stop element in a third position which permits essentially unimpeded water flow through the central water channel.

Figs. 4A-4C are schematic top views of the fuel rods and a multiple-tube modification of the central water channel in the assembly of Fig. 1, respectively illustrating successive stages of reactor operation wherein the central water channel is totally stopped, then partially stopped and subsequently completely opened to water flow.

Fig. 5A is a schematic partial longitudinal cross-sectional view of a central water channel of a nuclear fuel rod assembly, depicting an embodiment of a gating or stop element for partially blocking water flow through the central water channel.

Fig. 5B is a view similar to Fig. 5A, showing another gating or stop element in the central water channel of Fig. 5A, which permits greater water flow through the central water channel.

Fig. 5C is a view similar to Figs. 5A and 5B, showing the central water channel without a gating or stop element, thereby permitting unimpeded water flow through the central water channel.

Fig. 6 is a graph illustrating reactivity as a function of burnup calculated at 40% active flow void fraction, with two steps of water flow in the central water channel.

Fig. 7 is a graph similar to Fig. 6, illustrating the results of a case with only one water rod flow step.

Fig. 8 is a partial side elevational view of a fuel rod assembly with a gating or stop element in the form of a flow restriction plate adjacent an upper channel fitting for regulating water flow through the central or inner water channel.

Fig. 9 is a top view looking down upon the upper channel fitting shown in Fig. 8, showing the flow restriction plate in a closed configuration.

Fig. 10 is a bottom view looking up upon the flow-restriction plate and the upper channel fitting shown in Fig. 8, showing the flow restriction plate in an opened configuration.

Fig. 11 is a partial side elevational view of a central or inner water channel of a fuel rod assembly with yet another embodiment of a gating or stop element.

### Description of the Preferred Embodiments

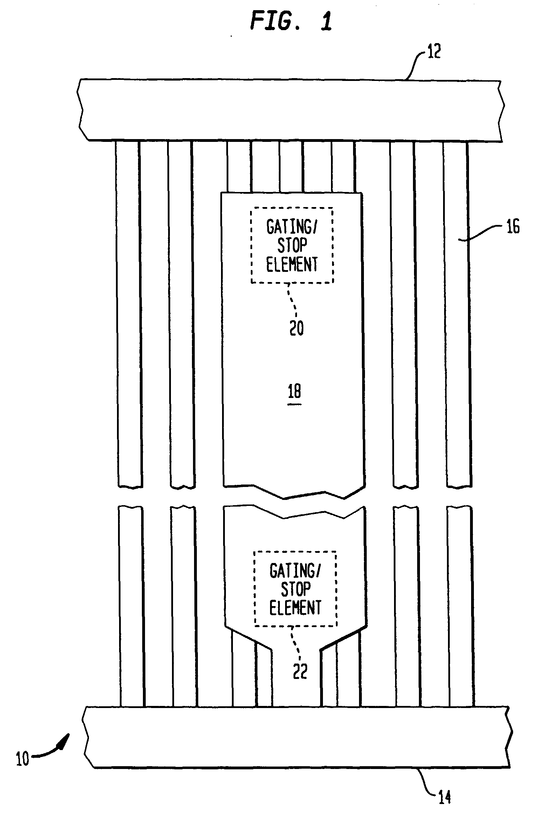

As illustrated diagrammatically in Fig. 1, a fuel rod assembly 10 for a nuclear reactor comprises an upper tie plate 12, a lower tie plate 14, a plurality of fuel rods 16 extending from the lower tie plate to the upper tie plate, and a central water channel 18 extending between lower tie plate 14 and upper tie plate 16. Although not shown, an outer water channel which extends around the outer periphery of the fuel rods from the lower tie plate to the upper tie plate, as well as part length fuel rods, may be included in the fuel assembly. A gating or stop element 20 or 22 is connected to central water channel 18 respectively at an upper or lower end thereof. Each gating or stop element 20 and 22 is designed to at least partially block water moderator from flowing through central water channel 18 during a first phase of reactor operation, generally the first two or three cycles of reactor operation. Gating or stop element 20 or 22 is shiftably connected to central water channel 18 to enable opening of the central water channel to permit more water moderator flow therethrough during a second or subsequent phase of reactor operation.

Gating or stop element 20 or 22 enables an optimized moderation enhancement in a boiling water nuclear reactor. The gating or stop element 20 or 22 is a moderator throttle which at least partially disables the water channel moderating action in the first two or three cycles of reactor operation when the moderation is not advantageous and which is removed or shifted to restore the water channel moderating action in the remaining cycles of reactor operation when the water channel achieves the desired reactivity enhancement.

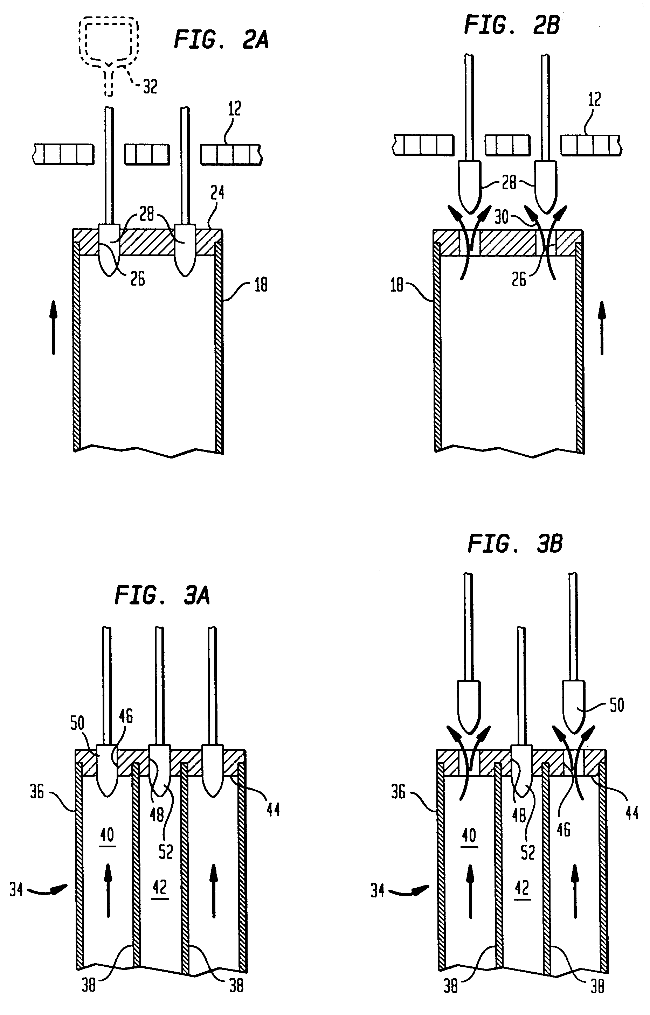

As illustrated in Figs. 2A and 2B, central water channel 18 is generally formed with an upper end fitting 24 provided with a plurality of flow holes 26 by which water moderator escapes from the central water channel. During one or more initial cycles of reactor operation, flow holes 26 are stopped by respective metal (e.g., zircaloy) plugs or stops 28 which collectively serve as gating element 20. After the first phase of reactor operation, plugs 28 are removed from flow holes 26, as illustrated in Fig. 2B, to permit unimpeded moderator flow through central water channel 18, as indicated by arrows 30. Generally, it is contemplated that plugs 28 are withdrawn from fuel rod assembly 10 after removal from flow holes 26. It is to be noted that plugs 28 have handles 32 which are larger than the space between fuel rods 16. Thus, if a plug 28 is dropped during its removal, it will not be lost and cause a loose part problem.

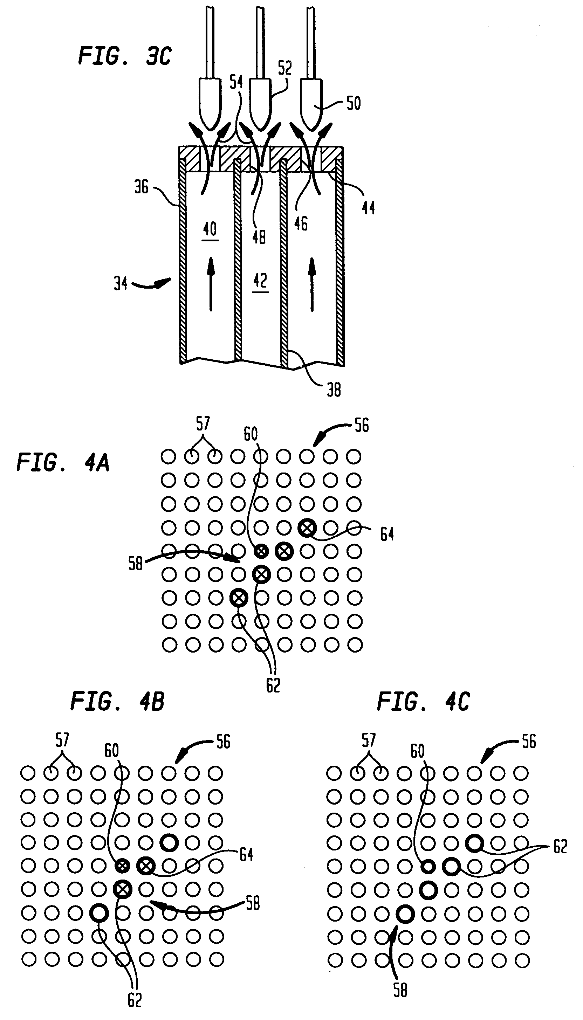

Figs. 3A-3C illustrate an embodiment 34 of central water channel 18 which includes a pair of nested walls 36 and 38 defining an outer water flow path 40 and an inner flow path 42. An upper end fitting 44 of central water channel 34 is provided with a plurality of first flow holes 46 which communicates with outer flow path 40 and is further provided with one or more second flow holes 48 which communicates with inner flow path 42. As shown in Fig. 3A, flow holes 46 and 48 are stopped by respective metal (e.g., zircaloy) plugs or stops 50 and 52 during one or more initial cycles of reactor operation. Subsequently, as shown in Fig. 3B, plugs 50 (or 52) are removed to enable unimpeded moderator flow along outer flow path 40 (or inner flow path 42) during a second phase of reactor operation (one or more operating cycles). The other plugs 52 (or 50) remain in place in their respective flow holes 48 (or 46) during this second phase of reactor operation, whereby the fuel rod assembly is partially moderated. During a third phase of reactor operation, the remaining plugs 52 (or 50) are also removed from their flow holes 48 (or 46), as depicted in Fig. 3C, to permit unimpeded moderator flow along both paths 40 and 42 through central water channel 34. Plugs 50 and 52 can be withdrawn from the fuel rod assembly through the upper tie plate after their removal from respective flow holes 50 and 52. However, plugs 50 and 52 can remain disposed below upper tie plate 12 (Fig. 1) and above upper end fitting 44 of central water channel 34. In that event, plugs 50 and 52 are configured to have a geometrical form for optimizing the flow of moderator (arrows 54) as it passes through flow holes 46 and 48 and enters the region above the central water channel 34. These considerations also apply to other plug-type gating or stop elements disclosed herein.

Figs. 4A-4C depict fuel rods 57 of a nuclear fuel assembly wherein the central water channel 58 takes the form of one small tubular water rod 60 and four large tubular water rods 62, in a bundle. During an initial phase of reactor operation continuing, for example, through two cycles, all of the water rods 60 and 62 are blocked, as schematically indicated by "X" marks 64 in Fig. 4A. During a subsequent second phase of reactor operation lasting, for example, one cycle, two of the four large water rods 62 are open while the remaining water rods are closed, as indicated by X marks 64 in Fig. 4B. Finally, during a subsequent third reactor operating phase, all water rods 60 and 62 are open, as indicated by the open thick-walled circles in Fig. 4C.

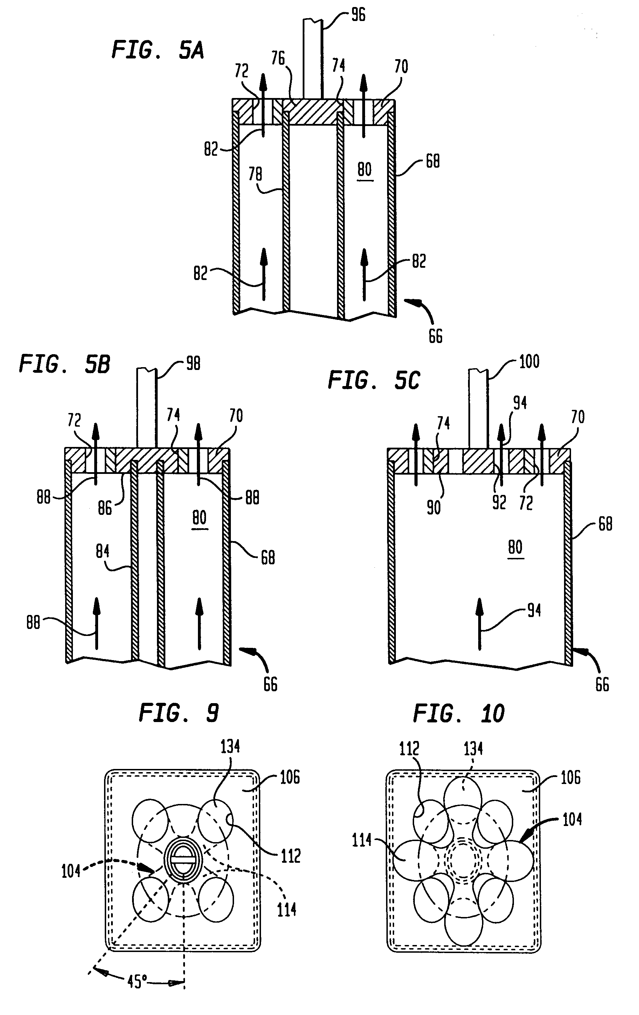

Figs. 5A through 5C illustrate another embodiment of the gating or stop element 20 discussed above and shown in Fig. 1. As depicted in Fig. 5A, a central water channel 66 includes an outer wall 68 and an upper end fitting or plate 70 to form a moderator flow duct 80. Upper end fitting 70 is provided with a plurality of flow holes 72 and a central opening 74 which receives an insert 76 to which a sealed empty tube or rod 78 is attached. Tube 78 which extends longitudinally through moderator flow duct 80 accordingly reduces the cross-sectional flow area of the duct. Arrows 82 indicate the flow of water moderator through duct 80 and flow holes 72. After an initial phase of reactor operation, e.g., two cycles, tube 78 is removed from central water channel 66 and replaced with a second sealed empty tube 84 of smaller cross-sectional area, as shown in Fig. 5B. Tube 84 is coupled at an upper end to a disk-shaped insert 86 which is received in an essentially fluid tight fit in opening 74. The moderator flow, indicated by arrows 88, through the unblocked or partially opened cross-section of duct 80 is now increased. At the end of this second phase of reactor operation typically lasting another cycle, tube 84 is removed from central water channel 66. A disk 90 optionally having flow holes 92 is then inserted into opening 74, as illustrated in Fig. 5C. Moderator flow, indicated by arrows 94, is again increased. Alternatively, opening 74 may be left open or unplugged, thereby enabling even greater moderator flow through central water channel 66. Inserts 76, 86 and 90 are each connected to respective shifting rods 96, 98 and 100 for enabling remote manipulation of the inserts and tubes 78 and 84 to change the moderator flow rate at predetermined times.

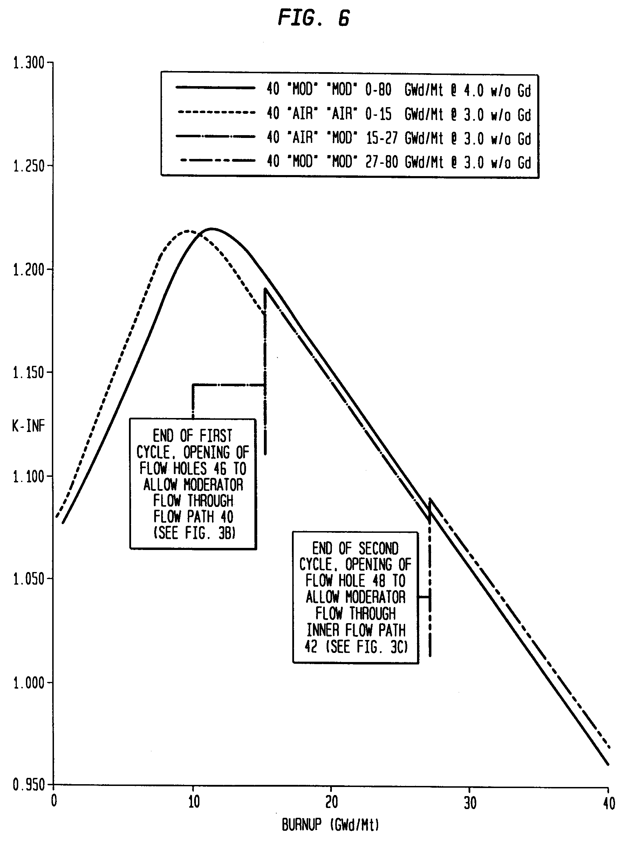

Fig. 6 is a graph illustrating reactivity as a function of burnup calculated at 40% active flow void fraction. In this example, two steps of water rod moderation are used with a 25% reduction of the Gadolinium absorber resulting in the same peak reactivity and a gain of 10 mK at the final burn-up of 40 gigawatt days per metric ton (GWD/MT). The gain in end reactivity is achieved by the reduction of residual absorber and increased plutonium production.

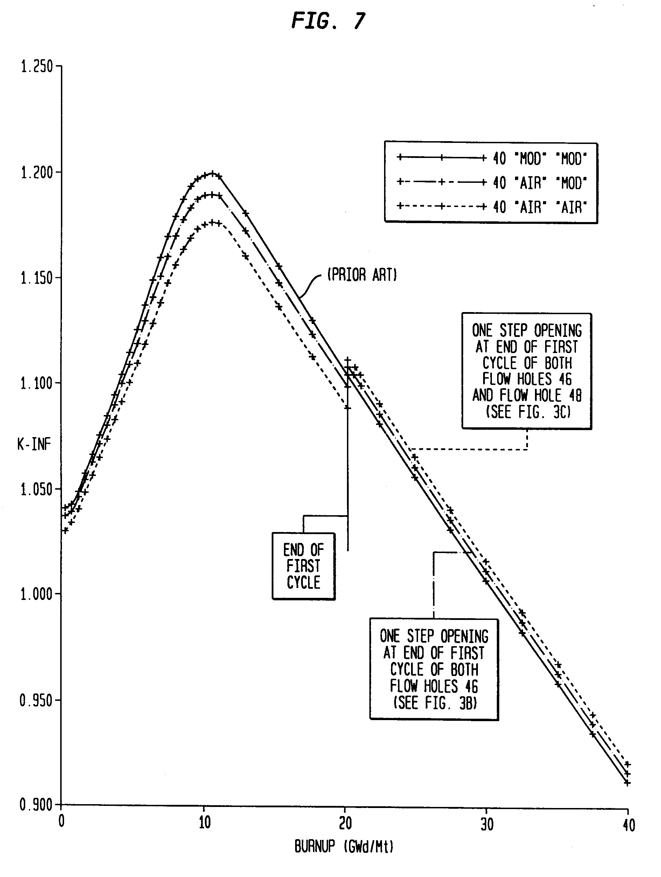

Fig. 7 is a graph illustrating reactivity as a function of burnup for a case with only one water rod flow step with the same Gadolinium quantity, and show the two anticipated advantages of lower peak reactivity and higher end reactivity.

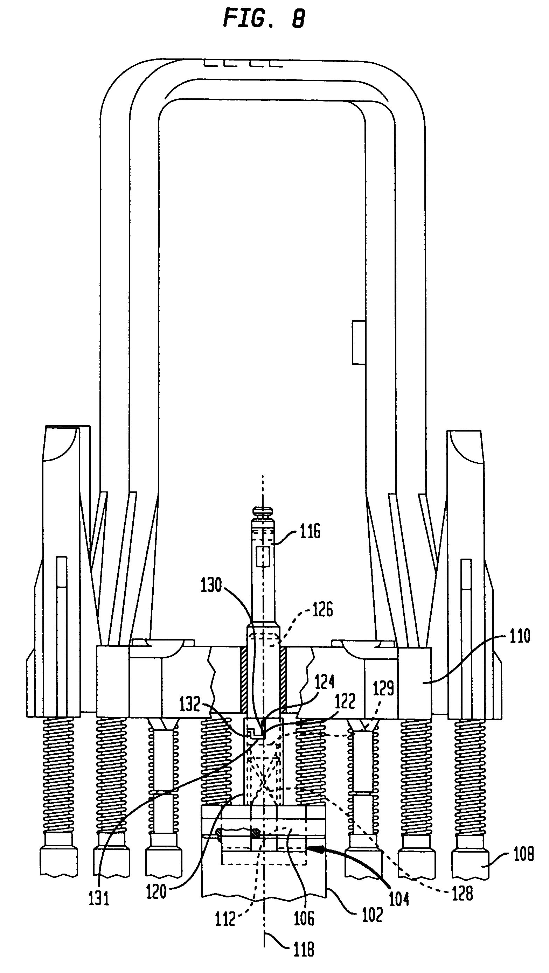

In an alternative embodiment shown in Figs. 8-10, the gating or stop element for controlling moderator flow through a central water channel 102 takes the form of a flow restriction plate 104 disposed inside the channel at the upper end thereof adjacent to an end fitting 106. Central water channel 102 extends generally parallel to nuclear fuel rods 108 between a lower tie plate (not shown) and an upper tie plate 110. Tie plate 110 is cut away and selected fuel rods removed from Fig. 8 to show flow restriction plate 104. Flow restriction plate 104 is depicted in a closed position.

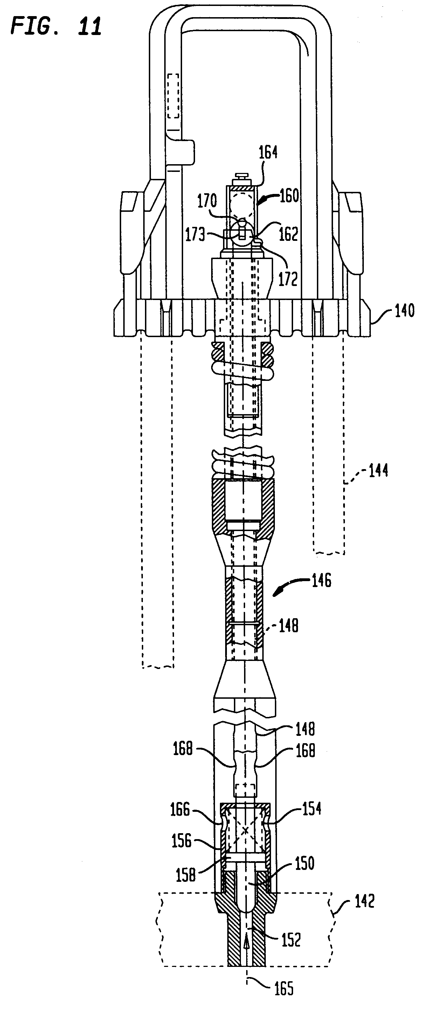

Upper end fitting 106 of central water channel 102 is provided with a plurality of flow holes 112. During an initial two or three cycles of reactor operation, flow holes 112 are blocked or closed by flow restriction plate 104. As shown in Figs. 9 and 10, flow restriction plate 104 comprises a plurality of angularly spaced, radially extending lobes 114. Fig. 9 shows flow restriction plate 104 in an angular position wherein lobes 114 are aligned with respective flow holes 112 of upper end fitting 106. Fig. 10 shows flow restriction plate 104 shifted 45° to another angular position wherein lobes 114 are out of alignment with flow holes 112, thereby opening the flow holes to moderator movement.

Flow restriction plate 104 is rotatable through the 45° angle from the flow-impeding position of Fig. 9 to the flow permitting position of Fig. 10 by an actuator rod 116. Actuator rod 116 is rigidly secured to plate 104 and extends through upper tie plate 110 and upper end fitting 106 along a vertical axis 118 of central water channel 102. Thus, flow restriction plate 104 and actuator rod 116 are rotatably mounted to central water channel 102.

A lower end of actuator rod 116 is rotatably disposed in a tubular member 120 rigidly attached to upper end fitting 106. Tubular member 120 is provided with a J-shaped slot 122 which is traversed by a pin 124 rigid with actuator rod 116. Pin 124 serves to hold actuator rod 116 in either the flow-impeding position of Fig. 9 or the flow enabling position of Fig. 10. To shift flow restriction plate 104 angularly from the one position to the other, a robotic arm (not shown) grasps an upper end of actuator rod 116 and shifts the rod axially downwardly to a position 126 in opposition to a restoring force exerted by a wave washer spring 128. The arm then turns rod 116 which concomitantly turns flow restriction plate 104 through the 45° angle about axis 118. At that juncture, actuator rod 116 is allowed to move axially upwardly under the force of spring 128.

Spring 128 is disposed radially between actuator rod 116 and tubular member 120 and longitudinally between upper end fitting 106 and a shoulder 129 on actuator rod 116. J-shaped slot 122 has a long leg 130 which is traversed by pin 124 at the flow-impeding or -blocking position of flow restriction plate 104 (Fig. 9). Pin 124 extends through a short leg 132 of slot 124 at the open position of flow-restriction plate 104 (Fig. 10). During the shifting of actuator rod 116 and flow restriction plate 104 downwardly at the end of the first phase of reactor operation, pin 124 slides along leg 130 of slot 122. During the turning of actuator rod 116 and flow restriction plate 104 through the 45° angle about axis 118, pin 124 slides along a horizontal portion 131 of J-shaped slot 122. Subsequently, pin 124 slides upwardly along short leg 132 of slot 122.

At their free ends, lobes 114 of flow restriction plate 104 are formed with upwardly facing thickened portions or elevations 134 which extend into respective flow holes 112 in the flow-blocking, closed position of flow restriction plate 104.

Fig. 11 depicts another embodiment of the present invention and shows a fuel rod assembly including an upper tie plate 140, a lower tie plate 142, a plurality of fuel rods 144, and a water rod 146 which is longitudinally traversed by a hollow flow regulator rod or tube 148. At a lower end, regulator rod 148 is provided with a stop ball or plug 150. During the first two or three cycles of reactor operation, stop ball 150 is seated in a water inlet opening or port 152 of water rod 146 to thereby close the inlet opening and prevent the flow of moderator through the water rod. Stop ball 150 is pressed into inlet port 152 by a compression spring 154 disposed between a spring housing element 156 and an annular flange 158 on regulator rod 148. During the two- or three-cycle initial reactor operating phase, any steam build-up in water rod 146 is released by a pressure relief valve 160 including a ball 162 seated on the upper end of regulator rod 148.

Regulator rod 148 is shiftably mounted to water rod 146 and firmly connected to a relief valve casing element 164. To remove stop ball 150 from inlet port 152 at the end of the first phase of reactor operation, a remote manipulator (not illustrated) grasps valve casing element 164 and pulls upwardly on regulator rod 148 to thereby effectuate a removal of the stop ball from the moderator inlet port. Water then flows into water rod 146 through inlet port 152, as indicated by an arrow 165. The incoming liquid moderator flows around flange 158, out of housing 156 through apertures 166, and into regulator rod 148 via openings 168. Relief valve 160 opens in response to the fluid pressure in regulator rod 148 and vents the water to the surrounding core pool via an outlet 170 in valve casing element 164. To maintain regulator rod 148 in an elevated position during a second or subsequent phase of reactor operation and, concomitantly, to retain stop ball 150 in an open position, an arresting retainer 172 is moved upward in the long section of an upside down "J" shaped slot 173 and is then rotated through a 90° angle about the axis 165 to the short leg of the upside down "J" shaped slot 173 where the arresting retainer 172 is lowered until it stops. Spring 154 exerts force on flange 158 thereby holding the regulator rod 148 and the arresting retainer 172 in place. This will locate pin 150 in the open position with respect to the seat 152 allowing water to flow through regulator rod 148.

It is to be noted that the devices disclosed herein can be operated while the fuel rod assemblies are in the reactor core without removing any fuel assembly from its position within the core.

Although the invention has been described in terms of particular embodiments and applications, one of ordinary skill in the art, in light of this teaching, can generate additional embodiments and modifications without departing from the spirit of or exceeding the scope of the claimed invention. Accordingly, it is to be understood that the drawings and descriptions herein are proffered by way of example to facilitate comprehension of the invention and should not be construed to limit the scope thereof.

## Claims

1. A fuel rod assembly in a nuclear reactor, comprising:
an upper tie plate;
a lower tie plate;
a plurality of fuel rods extending from said lower tie plate to said upper tie plate;
a central moderator channel extending between said lower tie plate and said upper tie plate, said central moderator channel having an end fitting provided with at least one flow hole;
a flow restriction plate disposed adjacent to said end fitting; and
an actuator rod traversing said upper tie plate, said actuator rod being operatively attached to said flow restriction plate for shifting said flow restriction plate from a first position in which flow through said flow hole is partially restricted to a second position in which flow through said flow hole is less restricted than at said first position of said flow restriction plate.

2. The fuel rod assembly defined in claim 1 wherein said central moderator channel has a vertical axis, said flow restriction plate and said actuator rod being rotatably mounted to said central moderator channel, whereby said first position and said second position are angularly spaced relative to one another.

3. The fuel rod assembly defined in claim 2 wherein said flow restriction plate has a shape for at least partially covering said flow hole to at least partially prevent moderator flow through said flow hole at said first position of said flow restriction plate and for opening said flow hole to permit greater moderator flow through said flow hole at said second position of said flow restriction plate.

4. The fuel rod assembly defined in claim 3, further comprising a holding mechanism for maintaining said flow restriction plate alternately in said one angular position and said another angular position.

5. The fuel rod assembly defined in claim 4 wherein said holding mechanism is spring loaded.

6. The fuel rod assembly defined in claim 5 wherein a tubular member is rigidly connected to said end fitting, said actuator rod extending through said tubular member and said end fitting, said holding mechanism including a pin rigid with said actuator rod and further including a slot in said tubular member, said pin traversing said slot.

7. The fuel rod assembly defined in claim 6 wherein said slot is essentially "J" shaped.

8. The fuel rod assembly defined in claim 6 wherein a helical spring is radially located between said actuator rod and said tubular member, said actuator rod having a shoulder spaced from said end fitting of said central moderator channel, said spring being disposed between said end fitting and said shoulder, to bias said actuator rod in an upward direction.

9. The fuel rod assembly defined in claim 3 wherein said end fitting is provided with a plurality of flow holes angularly spaced about said axis of said central moderator channel, said flow restriction plate being formed with a plurality of radially extending lobes angularly spaced about said axis.

10. The fuel rod assembly defined in claim 9 wherein each of said lobes is provided with a thickened portion extending into a respective one of said flow holes in said first position of said flow restriction plate.

11. A fuel rod assembly in a nuclear reactor, comprising:
an upper tie plate;
a lower tie plate;
a plurality of fuel rods extending from said lower tie plate to said upper tie plate;
at least one moderator channel extending between said lower tie plate and said upper tie plate, said moderator channel having an inlet opening at a lower end; and
a moderator-flow regulator rod extending substantially axially through said moderator channel or moderator control rod, said regulator rod being provided at a lower end with a stop ball inserted into said inlet opening to block moderator flow through said moderator channel during a first phase of reactor operation, said regulator rod being shiftably mounted to said moderator channel so as to enable a removal of said stop ball from said inlet opening to permit a greater moderator flow through said moderator channel during a second phase of reactor operation.

12. The fuel rod assembly defined in claim 11 wherein said regulator rod is spring loaded to bias said stop ball to a closure position relative to said inlet opening.

13. The fuel rod assembly defined in claim 11 wherein said regulator rod is hollow to accommodate a flow of moderator through said regulator rod upon a removal of said stop ball from said inlet opening.

14. The fuel rod assembly defined in claim 11 wherein said regulator rod is provided at an upper end with a pressure relief valve for allowing steam to escape from said moderator channel or moderator control rod.

15. A method for controlling moderator flow in a fuel assembly of a nuclear reactor, comprising:
during a first phase of reactor operation, maintaining a flow restriction plate in at least partial overlap with flow holes in a central moderator channel of the fuel assembly, thereby at least partially blocking liquid moderator from freely flowing through the central moderator channel; and
at the end of said first phase, angularly shifting said flow restriction plate about an axis of said central moderator channel, thereby opening said flow holes to greater moderator flow through said central moderator channel during a later phase of reactor operation.

16. The method defined in claim 15, further comprising at the end of said first phase, longitudinally or axially shifting said flow restriction plate to disengage said flow restriction plate from said flow holes prior to the angular shifting of said flow restriction plate.

17. The method defined in claim 15, further comprising automatically releasing excess steam from said central moderator channel via a pressure relief valve during said first phase of reactor operation.
